(19)

Europäisches
Patentamt
European
Patent Office
Office européen
des brevets

(11) **EP 1 826 692 A2**

(12) **EUROPEAN PATENT APPLICATION**

(43) Date of publication:
**29.08.2007 Bulletin 2007/35**

(51) Int Cl.:
***G06F 17/30*** *(2006.01)*

(21) Application number: **07250743.7**

(22) Date of filing: **22.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.02.2006 US 776177 P**

(71) Applicant: **Copernic Technologies, Inc.**
**Sainte-Foy, Quebec G1P 4N3 (CA)**

(72) Inventor: **Brault, Frédérick**
**Lévis,**
**Quebec, G6V 1W1 (CA)**

(74) Representative: **Greenwood, John David et al**
**Graham Watt & Co LLP**
**St Botolph's House**
**7-9 St Botolph's Road**
**Sevenoaks**
**Kent TN13 3AJ (GB)**

(54) **Query correction using indexed content on a desktop indexer program.**

(57)     Apparatus and methods useful for desktop searching are disclosed. According to one embodiment of the invention, for each query, the system evaluates if similar ones would give more results. If so, the system suggests the user with one or several similar queries. Similar queries are based on indexed content so corrections conduct to (that is, lead to) at least one result. According to another embodiment of the invention, for each keyword of the query the system computes a similarity value for a subset of all keywords of the index database. The subset is composed of all keywords minus the ones too short and too lengthy to be similar. Therefore, each keyword from the query gets a list of similar indexed keywords. According to yet another embodiment of the invention, the system replaces each query keyword, one after another, by a member of its similarity list until all combinations of substitutions are listed. The number of results for each similar query is calculated. Corrected queries giving significantly more results than the original query are suggested to the user.

**FIG. 1**

EP 1 826 692 A2

**Description**

CLAIM OF PRIORITY

This application claims the benefit of U.S. Provisional Application No. 60/776,177, filed February 22, 2006, the teachings of which are hereby incorporated by reference in their entirety.

FIELD OF THE INVENTION

The invention generally pertains to digital data processing and, more particularly, to searching. The invention has application, by way of non-limiting example, in correcting or modifying queries for searching on a personal computer, desktop, or workstation, among others.

BACKGROUND OF THE INVENTION

Automated searching of the personal computer "desktop" has become increasingly popular during the past few years. As software publishers have learned, however, many of the tools and techniques traditionally used for searching the Internet cannot be readily applied to desktop searching. Query correction provides one example. Traditional query correction techniques are too resource-intensive to be supported by personal computers. To compensate, some software developers have attempted to use Internet search engines to suggest corrections to user queries. However, such techniques may result in a query that gives no results (e.g., return zero or few hits) on the user's computer. Embodiments of the invention can provide the following:

improved methods and apparatus for digital data processing;

such methods and apparatus as can be applied to searching;

such methods and apparatus as can be applied to searching the "desktop" of a personal computer; and

such methods and apparatus as can be applied to searching network devices connected to

a personal computer.

SUMMARY OF THE INVENTION

These and other advantages are attained by the invention which provides, among other things, a system and method of query correction which can be used for example, by a desktop search application.
The present invention is as claimed in the claims.
In one embodiment of the invention, an exemplary computerized method of searching computer files is provided. Generally, for each query, the method evaluates whether similar queries would give more, or significantly more, results. If so, one or more of the similar queries are suggested to the user. Similar queries are based on indexed content so the corrections always lead to at least one result. More particularly, the method involves applying a query, e.g., having a query keyword and possibly query operators, to a database of indexed keywords extracted from computer files. The database of indexed keywords can be created by indexing computer files, which may be located on a personal computer, workstation, desktop computer, handheld computer, personal digital assistant, music player, and so on, and the indexed keywords can be such things as file names, directory names, metadata, and the content of computer files. The method involves obtaining, by the application of the query, a query result score that represents the number of computer files associated with indexed keywords satisfying the query. A similarity list is identified from the indexed keyword database. The similarity list contains one or more similar indexed keywords, e.g., indexed keywords that are similar to the query keyword. A similar indexed keyword from the similarity list is substituted for the query keyword in the query, creating a similar query. The method applies the similar query to the indexed keyword database to obtain a similar query result score. The similar query result score represents the number of computer files associated with indexed keywords that satisfy the similar query. Similar queries having a similar query result score that exceeds a threshold score (for example, a score higher than the query result score, or a score that is a multiple of the query result score, and so on) are suggested to the user.
The identification of the similarity list can occur in a variety of ways. In one embodiment, a similarity value is determined for an indexed keyword in the database of indexed keywords. If the similarity value exceeds a threshold value, the indexed keyword is treated as a similar indexed keyword. The similarity value can be determined based on an edit distance between the indexed keyword and the query keyword, the edit distance based at least on a measure of deleted characters, inserted characters, substituted characters, and swapped characters. The similarity value can also be determined based on an algorithm according to the following: edit(m,n) = min[edit(m-1, n) + Deletion cost, edit(m, n-1) + Insertion cost, edit(m-1, n-1) + Substitution cost, edit(m-1, n-1) + Swap cost], where m and n are the lengths of two strings s and t, Deletion cost, Insertion cost, Substitution cost, and Swap cost are predefined values, and edit() is an edit distance algorithm.

In another embodiment, a subset of indexed keywords from the database of indexed keywords is defined based on the query keyword. For example, the definition can exclude from the subset indexed keywords based on at least one of indexed keyword length and indexed keyword beginning character. A similarity value is determined for an indexed keyword in the subset, and the indexed keyword is treated as a similar indexed keyword if the similarity value exceeds a threshold value, as described above.

In some embodiments, identifying the similarity list involves defining a subset of indexed keywords from the database of indexed keywords based on the query keyword. In a first step, a similarity value is determined for each indexed keyword in the subset of indexed keywords that has a length identical to the query keyword, if there are any. If the first step results in no similar indexed keywords, in a second step a similarity value is determined for each indexed keyword in the subset of indexed keywords differing in length from the query keyword by one character, if there are any. If the second step results result in no similar indexed keywords, in a third step a similarity value is determined for each indexed keyword in the subset of indexed keywords differing in length from the query keyword by two characters, if there are any. In this way, it may be possible to avoid making determinations for some indexed keywords, e.g., if the first step is successful.

A wide range of other embodiments and/or variations are possible. For example, in another embodiment, a computerized method of searching computer files is provided. The method involves applying a query, which can include one or more query keywords, to a database of indexed keywords extracted from computer files. A query result score is thereby obtained, which represents the number of computer files associated with indexed keywords that satisfy the query. For each query keyword, a similarity list is created from the database of indexed keywords, the similarity list including one or more similar indexed keywords. The similar indexed keywords are similar to the query keyword. The method further involves repeatedly replacing each query keyword with each of the similar indexed keywords in its similarity list. The replacement proceeds until all combinations of query keywords and similar indexed keywords in the query have been exhausted. Each combination represents a similar query. Each similar query is applied to the indexed keyword database to obtain, for each similar query, a similar query result score. The similar query result score is representative of the number of computer files associated with indexed keywords that satisfy the similar query. Each similar query having a similar query result score that exceeds a threshold score is suggested to a user.

In some embodiments, the step of repeatedly replacing, as mentioned above, proceeds in a particular way. The similar indexed keywords in each similarity list are sorted by frequency of occurrence in the indexed keyword database. Then, the step of repeatedly replacing begins by substituting the similar indexed keyword having the highest frequency of occurrence in the indexed keyword database and proceeds in order of decreasing frequency of occurrence in the indexed keyword database. This proceeds only until the resulting similar query has a similar query result score below the threshold score, at which point it can be terminated.

In yet another embodiment, a method of query correction for desktop searching is also provided. The method includes indexing content, such as computer files, to create a database of indexed keywords. A query is applied to the database of indexed keywords, the query including a query keyword. A first list of computer files associated with indexed keywords that satisfy the query is thereby obtained. A similarity list is identified from the database of indexed keywords, the similarity list including a similar indexed keyword similar to the query keyword. In the query, the query keyword is replaced with the similar indexed keyword to create a similar query. The similar query is applied to the indexed keyword database to obtain a second list of computer files associated with indexed keywords that satisfy the similar query. The similar query is suggested to a user if the number of computer files on the second list exceeds a threshold number.

The systems and methods disclosed herein can have wide applicability, and can be used with a wide variety of devices, including personal computers, workstations, desktop computers, handheld computers, personal digital assistants, and music players. Moreover, the computer files to be searched or queried can include virtually any type of file, such as word processing files, "pdf" files, e-mail files, music files, picture files, video files, executable files, data files, configuration files, operating system files, folder information, and metadata.

BRIEF DESCRIPTION OF THE DRAWINGS

The invention will be more fully understood from the following detailed description of exemplary embodiments taken in conjunction with the accompanying drawings, in which:

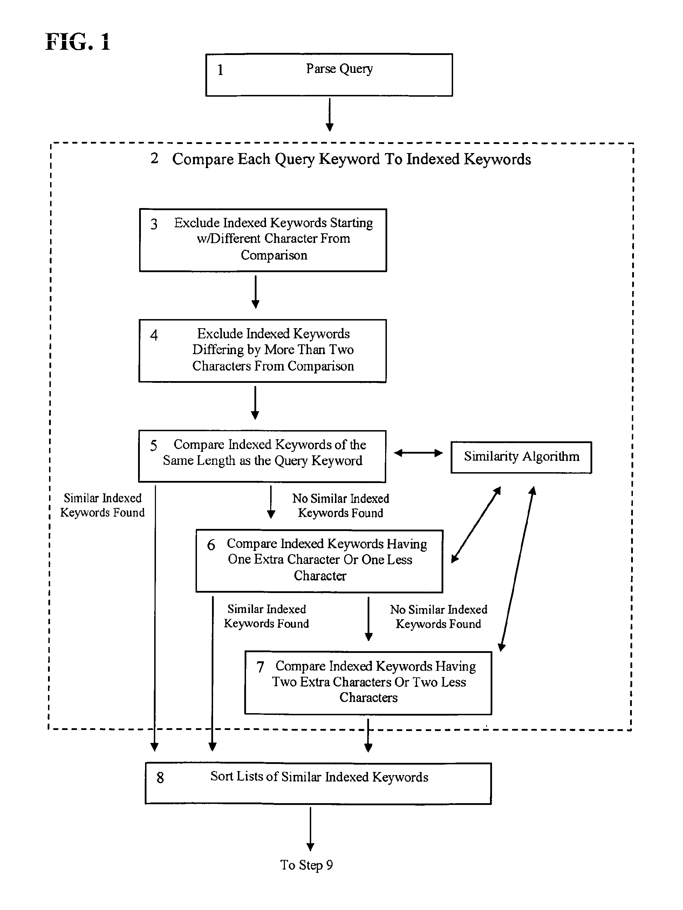

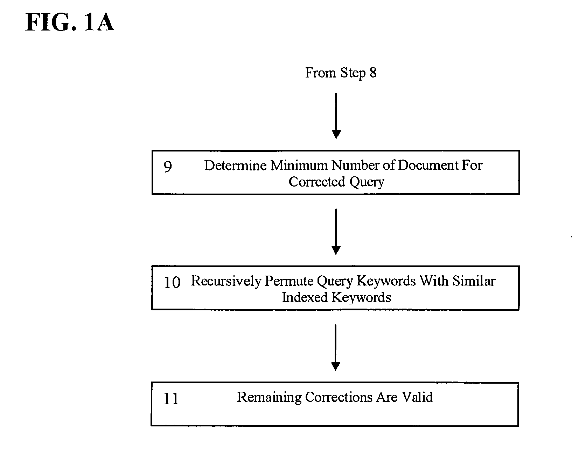

FIG. 1 is a block diagram illustrating an exemplary method of desktop searching; and

FIG. 1A is a continuation of the block diagram shown in FIG. 1.

DETAILED DESCRIPTION OF THE INVENTION

Certain exemplary embodiments will now be described to provide an overall understanding of the principles of the structure, function, manufacture, and use of the devices and methods disclosed herein. One or more examples of these embodiments are illustrated in the accompanying drawings. Those skilled in the art will understand that the devices and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention.

As used herein, the terms "desktop," "PC," "personal computer," and the like, refer to computers on which systems (and methods) according to the invention operate. In the illustrated embodiments, these are personal computers, such as portable computers and desktop computers; however, in other embodiments, they may be other types of computing devices (e.g., workstations, mainframes, handheld computers, personal digital assistants or PDAs, music or MP3 players, and the like).

Likewise, the terms "content," "file," or "document," unless otherwise evident from context, refers to computer files indexed by systems according to the invention. These include, by way of non-limiting example, word processing files, "pdf" files, e-mail files, music files, picture files, video files, executable files, data files, configuration files, operating system files, folder information, metadata, and so forth.

Overview

We have developed a system of query correction designed especially for use by a desktop search application. Traditional query correction is too heavy to be supported by desktop resources while some desktop search applications rely on internet search engines to suggest corrections. In that case, a corrected query may give no results on the user's computer.

For each query, our system evaluates if similar ones would give more results. If so, the system suggests the user with one or several similar queries. Similar queries are based on indexed content so corrections conduct to at least one result. More specifically, for each keyword of the query, a similarity value is computed for a subset of all keywords of the index database. The subset is composed of all keywords minus the ones too short and too lengthy to be similar. Therefore, each keyword from the query gets a list of similar indexed keywords.
Finally, each query keyword is replaced one after another by a member of its similarity list until all combinations of substitutions are listed. The number of results for each similar query is calculated. Corrected queries giving significantly more results than the original query are suggested to the user.

Desktop Search Engine

The query correction system described here can be used on a desktop search application. A desktop search application is one which searches the contents of a user's own computer files (for example, all the information that is available on the user's PC, including web browser histories, e-mail archives, word-processor documents, music files, video files and so on), rather than searching the Internet. Desktop searching also includes indexing and searching network content. In that case, even though the original content is hosted on the network, the indexed content can be kept on the user's computer.

A desktop search application builds and maintains an index database. The application first crawls the computer and network in search of files to index. For each file, extractors parse the document to determine keywords to store into its database called the index. Keywords include, but are not limited to:

    1. file and directory names
    2. meta data, such as titles, authors, comments
    3. content of supported documents

As will be apparent to one skilled in the art, keywords need not be limited to words and the like but can also be or include numerals, symbols, or virtually any character string having some significance. For example, the numerical size of file in bytes can be indexed and searched for as a keyword.

Once the index database has content, i.e., it has been built and populated, it can be searched with a query. The desktop search application looks into its index which documents contain the keywords of the query including the relation between them. The list of documents corresponding to the query is returned to the user.

The desktop search application receives a query, for example, from a user via a personal computer, workstation, personal digital assistant, through the Internet, and so on, as previously mentioned. The query can also be automated or computer-generated. The query is a sequence of keywords which relation between each other is indicated with operators such as, but not limited to, AND, OR, NOT, NEAR, parentheses ( ) and quotes "". When a query does not contain operator, the AND operator can be implicit between keywords.

Described below are algorithms used for evaluating the received query and for generating corrected queries

Similarity Algorithm

The similarity algorithm is based on the Edit distance algorithm suggested by Vladimir Levenshtein in 1965. This measure gives the cost to transpose one word into another in terms of deletions, insertions and substitutions. We modified the original edit distance algorithm to include the measure of swapped characters.

The algorithm for computing the Edit distance involves the use of an (n+1)*(m+1) matrix, where n and m are the lengths of the two strings. Therefore, for two strings s and t of length m and n, respectively, edit(m, n) is computed by the following recurrence relation:

$$edit(m, n) = min[edit(m-1, n) + \text{Deletion cost}, edit(m, n-1) + \text{Insertion cost}, edit(m-1, n-1) + \text{Substitution cost}, edit(m-1, n-1) + \text{Swap cost}]$$

where Deletion cost, Insertion cost, Substitution cost and Swap cost are predefined values.

Query Correction Algorithm

For each query, our system evaluates if similar ones would give more results. If so, the system suggests the user one or several similar queries. It is especially useful in cases where one or several keywords are misspelled in the query.

The system works as follows, with reference to steps illustrated in FIGS. 1 and 1A:

At step 1, the query is split into separate keywords and operators. (Creating the indexed keyword database, as previously described, is not shown in FIG. 1 but can occur prior to step 1.) Each keyword and operator is attributed a position that will be used later in the process.

Example for the query "patent filing NOT penting," where *pending* is misspelled as *penting:*

| Keywords and operator | patent | filing | NOT | penting |
|---|---|---|---|---|
| Position | 1 | 2 | 3 | 4 |

At step 2, each keyword of the query is compared to those stored in the index to find the most similar ones. The system does not search similarity for operators, however in some embodiments doing so can be advantageous.

At step 3, to reduce operations for use on a desktop application, comparison is limited to indexed keywords beginning with the same letter instead of all indexed keywords. For instance, for the misspelled keyword *penting*, only keywords beginning with the letter p are considered.

At step 4, to reduce operations for use on a desktop application, comparison is further restricted to keywords that have, at most, a length difference of two characters instead of all indexed keywords beginning with the same letter. For instance, for the misspelled keyword *penting* of length 7, only indexed keywords of length 5 to 9 will be considered.

(Steps 5 to 7 are meant to reduce the number of computing operations for use on a desktop search.)

At step 5, indexed keywords of same length are compared first. Since those keywords have the same length, the only possible differences between them are character swaps and/or character substitutions. Based on this assumption, if one or several keywords get the highest possible similarity score (e.g., per the Similarity Algorithm described above), then those strings are put in a list and the comparison process is complete. Indeed, if swap and substitution costs (e.g., per the Similarity Algorithm described above) are set appropriately, keywords different from each other by a character swap will get the highest score. If such a case is not found, keywords different from each other by one character substitution will get the highest score. If operation costs are set appropriately, the score of those situations can be recognized. If one of those cases happens, the most similar indexed keywords have been found and the comparison process can stop there. The list of similar indexed keywords is associated with the corresponding query keyword. For instance, if the indexed keyword *pending* is found, it is associated to the misspelled keyword *penting*. In that case, the search for a similar word can stop there because indexed keywords having one or two characters more or less would necessarily have a lower similarity score. Note: exact matching strings (the query keyword is the same as the indexed keyword being compared) are skipped.

At step 6, if no similar indexed keywords have been found in the previous step, indexed keywords having one extra character and one character less are processed. Indexed keywords having a difference of one character with no swap and no substitution will get the highest score. If operation costs (e.g., per the Similarity Algorithm described above) are set appropriately, the score of this situation can be recognized. If indexed keywords happen to get this score, they are put in a list and associated with the corresponding query keyword. The comparison process can stop there.

At step 7, if no similar indexed keywords have been found in the previous step, indexed keywords having two extra characters and two characters less are processed. If one or several keywords get the highest possible score then those strings are put in a list and the comparison process is complete.

At step 8, each list of similar indexed keywords is sorted in decreasing order of frequency in the index. The original keyword in included in the list, with its frequency with the appropriate rank.

At step 9, the minimum number of documents a corrected query must retrieve to be suggested is computed, using the number of documents retrieved by the original query:

a) If the original query returned 0 document, then corrections that return at least 1 result are valid;

b) If the original query returned between 1 and 9 documents, then corrections that return at least 3 times the number of original results are valid;

c) If the original query returned between 10 and 99 documents, then corrections that return at least 5 times the number of original results are valid;

d) If the original query returned 100 documents or more, then corrections that return at least 10 times the number of original results are valid. This number is used as a threshold to avoid suggesting corrections at each query.

At step 10, recursively, each keyword of the query is permuted with a member of its list of similar indexed keywords. Positions of step 1 are used to reproduce the syntax where each operator is at the same place.

To reduce operations for use on a desktop application, the recursive process uses the frequency of the similar keywords to evaluate, each time a keyword is permuted, if the correction will fail to retrieve more then the minimum number of documents required (see, e.g., step 9). Since the similar keyword lists are sorted from the most frequent to the less frequent, the recursive process completes similar queries from the most probable to the less probable. As soon as the number of threshold falls below the threshold, the process is stopped because no better queries can be found. For instance, a combination containing a similar keyword of frequency 10 will never retrieve enough documents if the threshold is higher (except if the similar keyword is preceded by the operator NOT). Since the list of similar keywords is sorted in decreasing order of frequency, all remaining similar keywords are discarded.

At step 11, remaining corrections are considered valid.

One skilled in the art will appreciate further features and advantages of the invention based on the above-described embodiments. Accordingly, the invention is not to be limited by what has been particularly shown and described, except as indicated by the appended claims.

**Claims**

1. A computerized method of searching computer files, comprising:

applying a query to a database of indexed keywords extracted from computer files, the query including a query keyword;
obtaining, by said application of the query, a query result score representative of the number of computer files associated with indexed keywords that satisfy the query;
identifying a similarity list from the database of indexed keywords, the similarity list including a similar indexed keyword that is similar to the query keyword;
substituting the similar indexed keyword for the query keyword in the query to create a similar query;
applying the similar query to the indexed keyword database to obtain a similar query result score representative of the number of computer files associated with indexed keywords that satisfy the similar query; and
suggesting the similar query to a user if the similar query result score exceeds a threshold score.

2. The method of claim 1, and any of:

a) further comprising receiving the query from a user of a device selected from the group consisting of: personal computer, workstation, desktop computer, handheld computer, personal digital assistant, music player;
b) wherein the computer files comprise files selected from the group consisting of: word processing files, "pdf" files, e-mail files, music files, picture files, video files, executable files, data files, configuration files, operating system files, folder information, and metadata;
c) further comprising indexing computer files to create the database of indexed keywords; and
d) wherein the indexed keywords comprise file names, directory names, metadata, and the content of computer files.

3. The method of claim 1, wherein the step of identifying the similarity list comprises:

determining a similarity value for an indexed keyword stored in the database of indexed keywords; and
treating the indexed keyword as the similar indexed keyword if the similarity value exceeds a threshold similarity value.

4. The method of claim 3, wherein the similarity value is determined based on an edit distance between the indexed keyword and the query keyword, the edit distance based at least on a measure of deleted characters, inserted characters, substituted characters, and swapped characters.

5. The method of claim 1, wherein the step of identifying the similarity list comprises:

defining a subset of indexed keywords from the database of indexed keywords based on the query keyword;
determining a similarity value for an indexed keyword in the subset of indexed keywords; and
treating the indexed keyword as the similar indexed keyword if the similarity value exceeds a threshold similarity value.

6. The method of claim 5, wherein the subset of indexed keywords is defined to exclude indexed keywords based on at least one of indexed keyword length and indexed keyword beginning character.

7. The method of claim 1, and any of:

a) wherein the step of identifying the similarity list comprises:

defining a subset of indexed keywords from the database of indexed keywords based on the query keyword;
in a first step, determining a similarity value for each indexed keyword in the subset of indexed keywords, if any, that has a length identical to the query keyword;
if the first step results in no similar indexed keywords, in a second step determining a similarity value for each indexed keyword in the subset of indexed keywords, if any, differing in length from the query keyword by one character;
if the second step results result in no similar indexed keywords, in a third step determining a similarity value for each indexed keyword in the subset of indexed keywords, if any, differing in length from the query keyword by two characters;

b) further comprising sorting the similarity list by frequency of occurrence in the indexed keyword database; and
c) wherein the threshold score is based on the query result score.

8. A computerized method of searching computer files, comprising:

applying a query to a database of indexed keywords extracted from computer files, the query including one or more query keywords;
obtaining, by said application of the query, a query result score representative of the number of computer files associated with indexed keywords that satisfy the query;
for each query keyword, creating a similarity list from the database of indexed keywords, the similarity list including one or more similar indexed keywords, each similar indexed keyword being similar to the query keyword;
repeatedly replacing each query keyword with each of the similar indexed keywords in the similarity list associated therewith until all combinations of query keywords and similar indexed keywords in the query have been exhausted, each combination representing a similar query;
applying each similar query to the indexed keyword database to obtain, for each similar query, a similar query result score representative of the number of computer files associated with indexed keywords that satisfy the similar query; and
suggesting to a user each similar query having a similar query result score that exceeds a threshold score.

9. The method of claim 8, further comprising indexing computer files to create the database of indexed keywords.

10. The method of claim 8, wherein the step of creating comprises:

defining a subset of indexed keywords from the database of indexed keywords based on the query keyword;
determining a similarity value for each indexed keyword in the subset of indexed keywords; and
treating each indexed keyword in the subset of indexed keywords as one of the one or more similar indexed keywords based on the similarity value for the indexed keyword.

11. The method of claim 10, and any of:

a) wherein the step of determining a similarity value comprises:

in a first step, determining a similarity value for each indexed keyword in the subset of indexed keywords, if any, that has a length identical to the query keyword;
if the first step results in no similar indexed keywords, in a second step determining a similarity value for each indexed keyword in the subset of indexed keywords, if any, differing in length from the query keyword by one character;
if the second step results result in no similar indexed keywords, in a third step determining a similarity value for each indexed keyword in the subset of indexed keywords, if any, differing in length from the query keyword by two characters;

b) wherein the similarity value is determined based on an edit distance between the indexed keyword and the query keyword, the edit distance including measurement of deleted characters, inserted characters, substituted characters, and swapped characters; and
c) wherein the similarity value is determined according to the algorithm: $edit(m,n) = min[edit(m-1, n) + Deletion\ cost, edit(m, n-1) + Insertion\ cost, edit(m-1, n-1) + Substitution\ cost, edit(m-1, n-1) + Swap\ cost]$, where $m$ and $n$ are the lengths of two strings $s$ and $t$, Deletion cost, Insertion cost, Substitution cost, and Swap cost are predefined values, and $edit()$ is an edit distance algorithm.

12. The method of claim 8, further comprising:

sorting the one or more similar indexed keywords in each similarity list by frequency of occurrence in the indexed keyword database,

wherein, for each query keyword, the step of repeatedly replacing begins by substituting the similar indexed keyword having the highest frequency of occurrence in the indexed keyword database and proceeds in order of decreasing frequency of occurrence in the indexed keyword database only until the resulting similar query has a similar query result score below the threshold score.

13. The method of claim 12, wherein the threshold score is based on the query result score.

14. The method of claim 8, wherein the threshold score is based on the query result score.

15. A method of query correction for desktop searching, comprising:

indexing content to create a database of indexed keywords, the content including computer files;
applying a query to the database of indexed keywords, the query including a query keyword;
obtaining, by said application of the query, a first list of computer files associated with indexed keywords that satisfy the query;
identifying a similarity list from the database of indexed keywords, the similarity list including a similar indexed keyword similar to the query keyword;
replacing the similar indexed keyword for the query keyword in the query to create a similar query;
applying the similar query to the indexed keyword database to obtain a second list of computer files associated with indexed keywords that satisfy the similar query; and
suggesting the similar query to a user if the number of computer files on the second list exceeds a threshold number.

**16.** The method of claim 15, and any of:

a) wherein the content is local content residing on a personal computer;
b) further comprising storing the indexed keyword database on a personal computer, wherein the content is network content;
c) wherein the indexed keywords comprise file names, directory names, metadata, and data in documents;
d) wherein the step of indexing comprises:

crawling computer files;
extracting keywords from computer files for storage in the indexed keyword database; and

e) wherein the step of identifying the similarity list comprises:

determining a similarity value for an indexed keyword; and
treating the indexed keyword as the similar indexed keyword if the similarity value exceeds a threshold similarity value.

**17.** The method of claim 15, wherein the step of identifying the similarity list comprises:

defining a subset of indexed keywords from the database of indexed keywords based on the query keyword;
determining a similarity value for an indexed keyword in the subset of indexed keywords;
treating the indexed keyword as the similar indexed keyword if the similarity value exceeds a threshold similarity value.

**18.** The method of claim 17, wherein the subset of indexed keywords is defined to exclude indexed keywords based on at least one of indexed keyword length and indexed keyword beginning character.

**19.** The method of claim 15, and either;

a) wherein the step of identifying the similarity list comprises:

defining a subset of indexed keywords from the database of indexed keywords based on the query keyword;
in a first step, determining a similarity value for each indexed keyword in the subset of indexed keywords, if any, that has a length identical to the query keyword;
if the first step results in no similar indexed keywords, in a second step determining a similarity value for each indexed keyword in the subset of indexed keywords, if any, differing in length from the query keyword by one character;
if the second step results in no similar indexed keywords, in a third step determining a similarity value for each indexed keyword in the subset of indexed keywords, if any, differing in length from the query keyword by two characters; or

b) wherein the threshold number is based on the number of computer files on the first list.

**FIG. 1**

To Step 9

# FIG. 1A

From Step 8

| 9 | Determine Minimum Number of Document For Corrected Query |
|---|---|

| 10 | Recursively Permute Query Keywords With Similar Indexed Keywords |
|---|---|

| 11 | Remaining Corrections Are Valid |
|---|---|

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 77617706 P